# EUROPÄISCHE PATENTSCHRIFT

(11) **EP 1 818 125 B1**
(45) Veröffentlichungstag und Bekanntmachung des Hinweises auf die Patenterteilung: **01.10.2008**
(21) Anmeldenummer: 07405032.9
(22) Anmeldetag: 06.02.2007
(51) Int. Cl.: B23B 31/107

(54) **Werkzeug für die spahnabhebende Bearbeitung**
Tool for chip cutting machining
Outil de traitement par enlèvement de copeaux

(30) Priorität: 13.02.2006 CH 2242006
(43) Veröffentlichungstag der Anmeldung: 15.08.2007
(73) Patentinhaber: Heinz Kaiser AG, 8153 Rümlang (CH)
(72) Erfinder: Kaiser, Heinz, 8304 Wallisellen (CH); Stadelmann, Rudolf, 9244 Niederuzwil (CH); Hänggi, Ernst, 8172 Niederglatt (CH)
(74) Vertreter: Groner, Manfred

(56) Entgegenhaltungen:
- EP-A1- 0 341 227
- EP-B1- 0 547 049
- WO-A-94/15110

## Beschreibung

Die Erfindung betrifft ein Werkzeug für die spahnabhebende Bearbeitung, mit einem ersten Werkzeugteil und mit einem zweiten Werkzeugteil, die eine gemeinsame Drehachse aufweisen, wobei der erste Werkzeugteil einen Passzapfen und an dessen Wurzel eine Ringfläche und der zweite Werkzeugteil eine achsiale Bohrung zur Aufnahme des Passzapfens sowie eine Ringfläche aufweist, die gegen die Ringfläche des ersten Werkzeugteils spannbar ist, mit Spannmitteln zum achsialen Spannen der beiden Werkzeugteile gegeneinander. Ein Werkzeug gemäß dem Oberbegriff von Anspruch 1 ist aus der WO 94/15110 bekannt.

Das Werkzeug ist insbesondere ein Bohrwerkzeug mit einem Arbeitskopf, der den ersten Werkzeugteil bildet und an dem ein Passzapfen angeordnet ist, der in eine Passbohrung eines Schaftes eingreift. Dieser Schaft bildet hier den zweiten Werkzeugteil. Solche Werkzeuge sind in verschiedenen Ausführungen seit langem bekannt.

Durch die EP-A-0 547 049 ist ein Werkzeug bekannt geworden, bei dem der Passzapfen eine radiale Durchgangsbohrung aufweist, in die ein Klemmbolzen, auch Pendelbolzen genannt, eingesetzt ist. Das eine Ende des Klemmbolzens besitzt einen Innenkonus, in den ein Aussenkonus einer Halteschraube eingreift. Das andere Ende des Klemmbolzens besitzt einen Aussenkonus, der in einen Innenkonus einer zweite Halteschraube eingreift. Mit den beiden Halteschrauben wird der Klemmbolzen achsial so gespannt, dass der Passzapfen in die Passbohrung einer Anschlusshülse gezogen wird. Die beiden Ringflächen werden dadurch fest aneinandergespannt. Die Wandstärke und das Material der Anschlusshülse, das Passspiel zwischen Passzapfen und Passbohrung und die Spannkraft sind so ausgebildet, dass die Anschlusshülse im Spannzustand in Achsrichtung des Klemmbolzens elastisch aufgeweitet wird. Zudem wird in Querrichtung der Durchmesser der Passbohrung verringert und dadurch die Anschlusshülse gegen die Aussenseite des Passzapfens angepresst. Im Querschnitt nimmt dadurch die Passbohrung eine etwa ovale Form an. Eine solche elastische ovale Verformung der Anschlusshülse bzw. des zweiten Werkzeugteils wird als nachteilig angesehen. Alternativ und zur Vermeidung der genannten elastische Verformung der Anschlusshülse wird vorgeschlagen, die Überbrückung des Passspiels durch eine Ausbauchung des Passzapfens zu erreichen. Die genannte elalstische Verformung der Anschlusshülse soll dadurch zumindest zum Teil rückgängig oder entbehrlich gemacht werden. Um eine Ausbauchung des Passzapfens zu erreichen ist vorgesehen, dass dieser einen sich über die Querberührungslänge erstreckenden zum Inneren der Querbohrung offenen Einschnitt aufweist.

Der Erfindung liegt die Aufgabe zugrunde, ein Werkzeug der genannten Art zu schaffen, bei dem eine noch höhere Biegesteifigkeit und ein exakterer Rundlauf möglich ist. Das Werkzeug soll zudem bedienerfreundlich und kostengünstig herstellbar sein. Diese Aufgaben werden durch ein Werkzeug gemäß Anspruch 1 gelöst.

Es hat sich gezeigt, dass bei einem Winkel zwischen der ersten Halteschraube und der zweiten Halteschraube, der wesentlich grösser ist als 90° und wesentlich kleiner als 120° ist, eine Flächenpressung erreicht werden kann, die besonders symmetrisch ausgeglichen ist. Demzufolge ist das Biegemoment bezüglich der Drehachse des Werkzeuges neutral. Die symmetrische Anordnung der Flächenpressung bewirkt eine vorteilhafte achsparallele Verbindung der beiden Werkzeugteile.

Durch Festziehen der ersten und der zweiten Halteschraube entsteht ausser einer achsialen Kraft auch eine radiale Kraft, die eine Reibkraft zwischen dem Passzapfen und der achsialen Bohrung erzeugt. Durch die erfindungsgemässe Anordnung der Winkel zwischen den radialen Bohrungen entsteht eine resultierende Kraft, die grösser ist als die Kraft der gegenüberliegenden Halteschraube. Die Wirkung dieser erhöhten Kraft in achsialer Richtung kompensiert die Reibkraft.

Anstelle einer Vierpunktauflage kann eine polygonale Spreizung mit drei Auflagestellen des Passzapfens in der achsialen Bohrung erreicht werden. Einerseits ist die elastische Verformung des zweiten Werkzeugteils kleiner und andererseits ist diese elastische Verformung nicht oval, sondern polygonal, was eine günstigere symmetrische Verteilung der elastischen Verformung ergibt. Durch die genannten Anlagestellen ergibt sich eine höhere Steifigkeit der Verbindung zwischen den beiden Werkzeugteilen und damit eine höhere Zerspanungsleistung. Es hat sich auch gezeigt, dass die Bedienung einfacher ist, da die drei genannten Halteschrauben lediglich in einem Umgang festgezogen werden müssen. Ein mehrfacher bisher erforderlicher Umgang kann damit vermieden werden. Der Zeitaufwand zum Verbinden der beiden Werkzeugteile ist damit kürzer.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: ein Schnitt durch das erfindungsgemässe Werkzeug,
- Figur 2: schematisch die Anlage einer Halteschraube in einer Bohrung des Passzapfens,

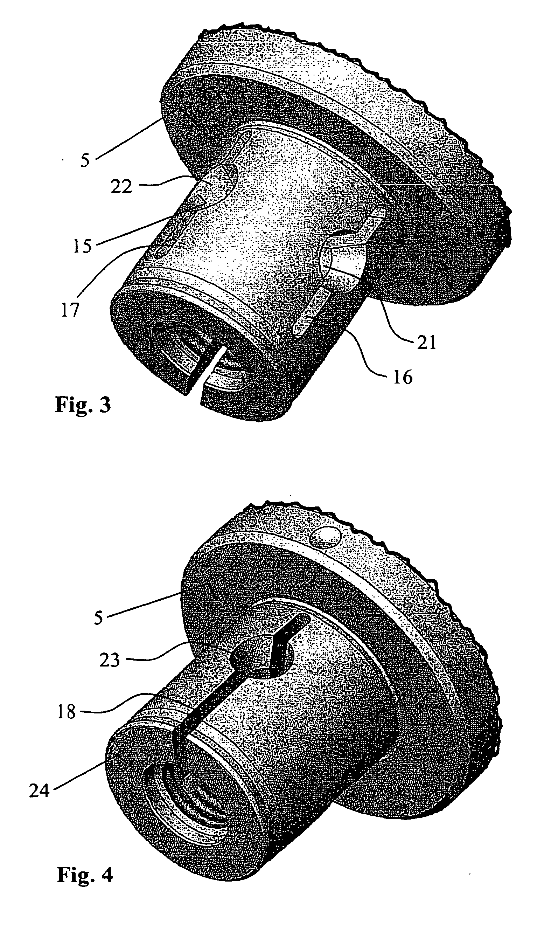

- Figur 3: eine räumliche Ansicht des Passzapfens,
- Figur 4: eine weitere räumliche Ansicht des Passzapfens,
- Figur 5: eine räumliche Ansicht eines sektoriell geschnittenen erfindungsgemässen Werkzeugs,
- Figur 6: ein Schritt gemäss Figur 1 zur Erläuterung der Flächenpressung zum Umfang des Passzapfens,
- Figur 7: ein teilweise geschnittenes erfindungsgemässes Werkzeug zur Erläuterung wirkender Kräfte,
- Figur 8: eine schematische räumliche Ansicht des ersten Werkzeugteils,
- Figur 9: schematisch ein radialer Schnitt durch den zweiten Werkzeugteil und
- Figur 10: ein Kräfteparallelogramm.

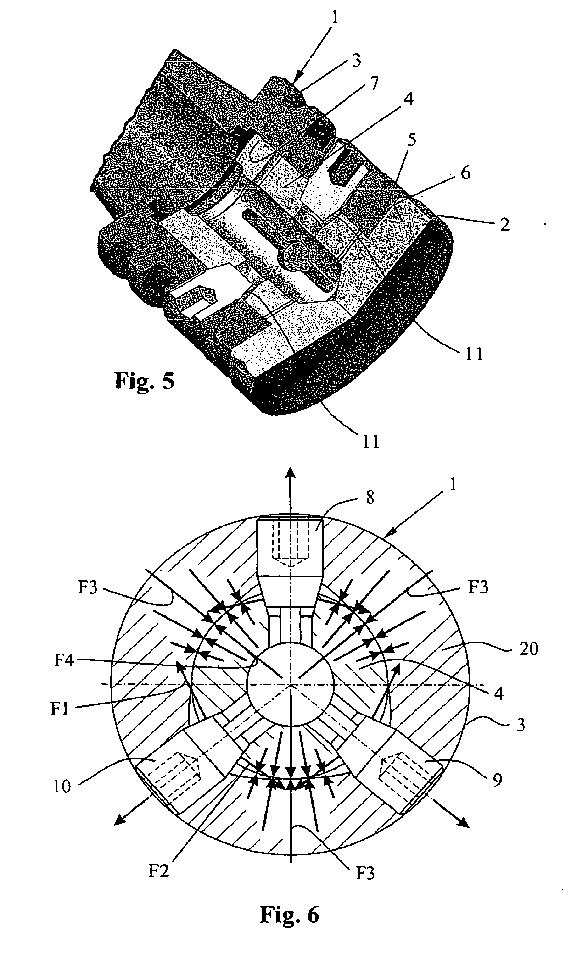

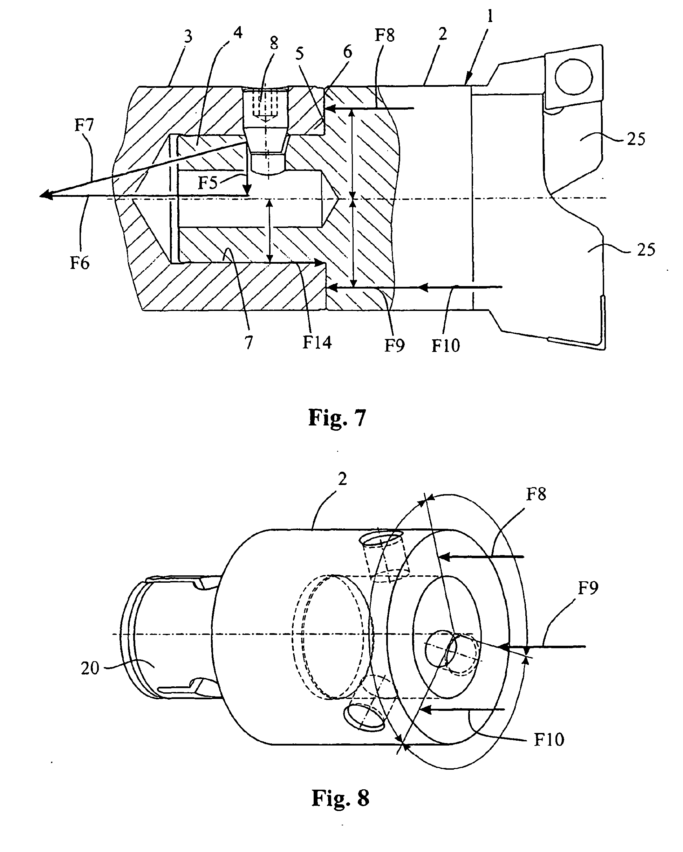

Das Werkzeug 1 besitzt beispielsweise gemäss Figur 5 einen ersten Werkzeugteil 2, der beispielsweise ein Arbeitskopf bildet, der zwei in Figur 7 gezeigte Schneidenträger aufweist. Der Werkzeugteil 1 ist insbesondere ein Bohrwerkzeug mit einer oder zwei verstellbaren Schneiden. Die genannte Erfindung kann ebenfalls als Modularsystem für Werkzeuge zur Bohrungsbearbeitung verwendet werden. Der erste Werkzeugteil 2 besitzt einen Passzapfen 4, der mit einem bestimmten Passspiel in eine achsiale Bohrung 7 eines zweiten Werkzeugteils 3 einsetzbar ist. Im zusammengebauten Zustand gemäss Figur 5 liegt eine Ringfläche 5 des ersten Werkzeugteils 2 an einer Ringfläche 6 des zweiten Werkzeugteils 3 an. Die beiden Werkzeugteile 2 und 3 besitzen eine gemeinsame Drehachse A und die beiden genannten Ringflächen 5 und 6 liegen in einer Ebene, die quer zu dieser Drehsachse verläuft.

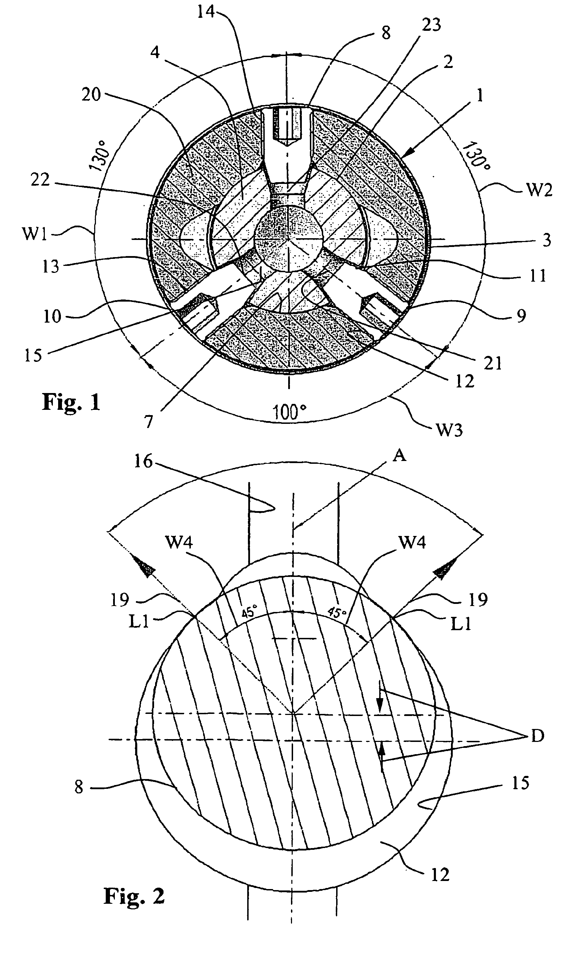

Um die beiden Ringflächen 5 und 6 gegeneinander zu spannen und damit die beiden Werkzeuge 2 und 3 fest miteinander zu verbinden, sind als Spannmittel drei Halteschrauben 8, 9 und 10 vorgesehen, die gemäss den Figuren 1, 6 und 9 am Umfang des zweiten Werkzeugteils 3 verteilt angeordnet sind. Die Anordnung ist gemäss den Figuren 1, 6 und 9 spiegelsymmetrisch. Die in Figur 1 gezeigten Winkel W1 und W2 sind gleich und der Winkel W3 ist kleiner als 120° und grösser als 90°. Bevorzugt sind die Winkel W 1 und W2 grösser als 125° und insbesondere etwa 130°. Der Winkel W3 ist vorzugsweise kleiner als 105° und vorzugsweise grösser als 95°. Noch vorzugsweiser beträgt der Winkel W3 etwa 100°.

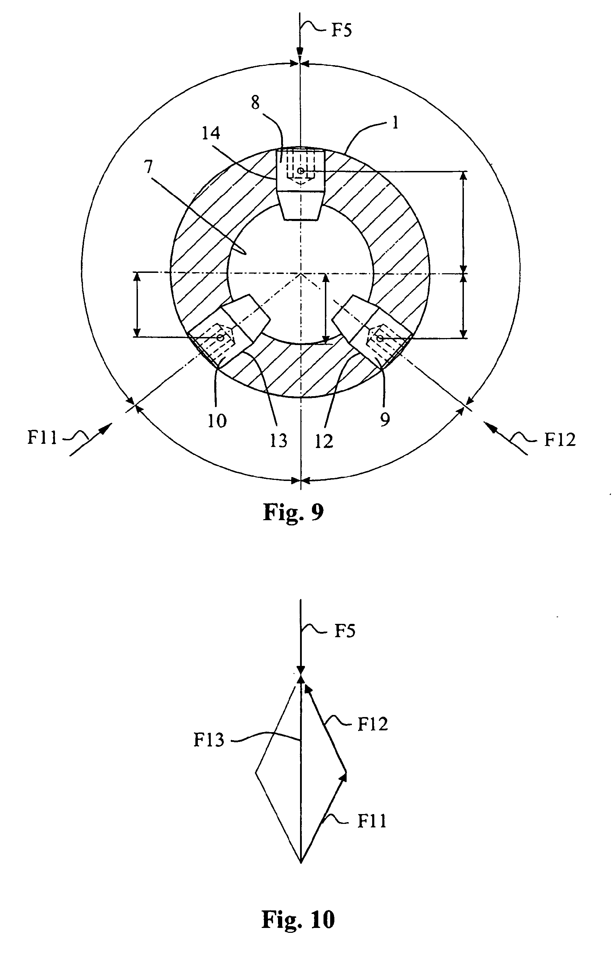

Die Halteschrauben 8, 9 und 10 sind jeweils in eine radiale Bohrung 12, 13 bzw. 14 eingeschraubt wie die Figuren 1 und 9 zeigen. Diese Bohrungen 12, 13 und 14 sind Gewindebohrungen, die jeweils gemäss Figur 1 radial durch eine Wandung 20 des zweiten Werkzeugteils 3 hindurchgehen. Die Halteschrauben 8, 9 und 10 können beispielsweise mit einem hier nicht gezeigten Inbussschlüssel bedient werden. Am vorderen stirnseitigen Ende besitzen diese Halteschrauben 8, 9 und 10 jeweils einen Aussenkonus 11, der jeweils in eine radiale Bohrung 21, 22 bzw. 23 des Passzapfens 4 eingreift. Diese Bohrungen 21, 22 und 23 sind jeweils mit einer konischen Fläche 15 versehen, die korrespondierend zum Aussenkonus 11 ausgebildet ist. Die Achsen der Halteschrauben 8, 9 und 10 sind jeweils bezüglich der Achsen der Bohrungen 21, 22 und 23 gemäss Figur 2 um den Abstand D in Richtung jeweils eine Drehachse A versetzt. Beim Einschrauben der Halteschrauben 8, 9 und 10 wirkt die Kraft F7 jeweils auf diese Halteschrauben. Diese Kräfte F7 besitzen jeweils eine radiale Kraftkomponente F5 und eine achsiale Kraftkomponente F6. Die Kraftkomponente F6 wirkt in achsialer Richtung auf den Passzapfen 4.

Beim Festziehen der beiden Halteschrauben 9 und 10 entsteht neben der genannten achsialen Kraft F6 (Fig. 7) auch die radiale Kraft F5, die eine in Figur 7 angedeutete Reibkraft F9 zwischen dem Passzapfen 4 und der Bohrung 7 erzeugt. Durch die genannte Anordnung der Winkel W1, W2 und W3 entstehen gemäss Figur 7 und 10 Kräfte F9 und F10, die in ihrer Summe grösser sind als die durch die Halteschraube 8 hervorgerufene Kraft. Die Wirkung der beiden Kräfte F9 und F10 in achsialer Richtung kompensiert die Reibkraft F9. Indem der Winkel W3 kleiner als 120° und grösser als 90° gewählt wird, kann die Flächenpressung durch die Kräfte F8, F9 und F10 symmetrisch ausgeglichen werden. Demzufolge ist das Biegemoment bezüglich der Drehachse A neutral. Die erreichbare hohe symmetrische Flächenpressung bewirkt eine vorteilhafte achsparallele Verbindung der beiden Werkzeugteile 2 und 3.

Der Passzapfen 4 weist an seinem Umfang drei Ausnehmungen 16, 17 und 18 auf, welche jeweils durch eine der Bohrungen 21, 22 bzw. 23 hindurchgehen. Diese Ausnehmungen 16, 17 und 18 sind wie ersichtlich schlitzförmig und gehen durch die Wandung 20 radial hindurch. Die Ausnehmungen 16, 17 und 18 sind vorzugsweise offene Schlitze mit einer Breite von 0,2 bis 0,4 mm und sind vorzugsweise mit einem Laser hergestellt. Die Ausnehmungen 16, 17 und 18 können aber auch gefräste Schlitze mit einer Breite von etwa 1 mm bis 5 mm sein. Sie erstrecken sich achsial, wobei die Ausnehmung 18 an einer Stirnfläche 24 des Passzapfens 4 offen ist. Die beiden anderen Schlitze 16 und 17 sind hingegen nicht achsial durchgehend oder durchgehend. Werden die Halteschrauben 8, 9 und 10 gegen den Passzapfen 4 gespannt, so wird der Passzapfen 4 achsial in die Bohrung 7 des zweiten Werkzeugteils 3 hineingezogen. Die Halteschrauben 8, 9 und 10 liegen hierbei gemäss den Figur 2 und 6 an zwei Flächen L1 der konischen Fläche 15 an und üben dadurch in einem Winkel W4 von etwa 90° zueinander Kräfte in Richtung der Pfeile 19 auf den Passzapfen 4 aus. Durch diese Kräfte werden die Ausnehmungen 16, 17 und 18 in Umfangsrichtung des Passzapfens 4 aufgeweitet. Der Passzapfen 4 wird damit jeweils im Bereich der Ausnehmung 16, 17 und 18 elastisch deformiert. Die Deformation ist polygonal gemäss der Anordnung der Halteschrauben 8, 9 und 10. Entsprechend wird der Umfang des Passzapfens 4 polygonal ausgebraucht und an die Bohrung 7 des zweiten Werkzeugteils 3 angepresst. Die Wandung 20 des zweiten Werkzeugteils 3 wird aufgrund der Spannung der Halteschrauben 8 bis 10 ebenfalls elastisch verformt, jedoch wesentlich wenig, da hier Ausnehmungen entsprechend den Ausnehmungen 16 bis 18 nicht vorgesehen sind. Dadurch wird das Passspiel des Passzapfens 4 in der achsialen Bohrung 7 aufgehoben. Durch die in Figur 6 gezeigte Verteilung der entsprechenden anliegenden Bereiche auf den Umfang des Passzapfens 4 ergibt sich eine sehr stabile Verbindung zwischen den beiden Werkzeugteilen 2 und 3. Wie die Figur 6 zeigt, erfordert die Aufweitung des Passzapfens 4 durch Kräfte F1 und F2 und die Anpressung des Passzapfens 4 an seinem Umfang durch Kräfte F3 und F4.

Die in den Figuren 8 bis 10 eingezeichneten Kräfte bewirken eine homogene Flächenpressung auf die Ringflächen 5 und 6. Die Kräfte F5, F11 und F12 entstehen beim Anziehen der Spannschrauben 8, 9 und 10 in radialer Richtung. Infolge der konischen Ausbildung der Spannschrauben 8, 9 und 10 kann die wirkende Kraft pro Spannschraube in eine radiale und eine axiale Kraft zerlegt werden. Wesentlich sind schlussendlich die in Figur 8 gezeigten Kräfte F8, F9 und F10, die eine über die Ringflächen 5 und 6 verteilte regelmässige bzw. homogene Flächenpressung bewirken.

Die in Figur 10 schematisch dargestellte resultierende Kraft F13 der Kräfte F11 und F12 ist grösser als die Gegenkraft F5. In der Figur 10 ist der Winkel zwischen den Kräften F 11 und F12 zur Verdeutlichung grösser als der bevorzugte Winkel von 100°. Durch die erhöhte Kraft F13 wird die Reibkraft F9 (Fig. 7), respektive die axiale Komponente der Kräfte F5, F12 und F13 kompensiert. Demzufolge ist die Flächenpressung auf die Ringflächen 5 und 6 homogen.

Die Ausnehmungen 16, 17 und 18 erstrecken sich wie ersichtlich auch in Richtung der Ringfläche 5 über jeweils eine Bohrung 21, 22 bzw. 23 hinaus. Die Ausbuchtungen erstrecken sich deshalb entsprechend achsial im Wesentlichen von der Stirnfläche 24 bis zur Ringfläche 5. Die Bereiche sind somit nicht punktuell, sondern linienförmig. Dies ergibt eine besonders hohe Steifigkeit und Stabilität sowie eine gute Vibrationsdämpfung der Verbindung.

Das Werkzeug 1 zeichnet sich zudem durch eine hohe Komptabilität aus. Insbesondere kann der erste Werkzeugteil 2 auch mit einem zweien Werkzeugteil 3 verbunden werden, der lediglich eine Halteschraube 8, 9 oder 10 aufweist.

### Bezugszeichenliste

- 1: Vorrichtung
- 2: erster Werkzeugteil
- 3: zweiter Werkzeugteil
- 4: Passzapfen
- 5: Ringfläche
- 6: Ringfläche
- 7: achsiale Bohrung
- 8: Halteschraube
- 9: Halteschraube
- 10: Halteschraube
- 11: Aussenkonus
- 12: Bohrung
- 13: Bohrung
- 14: Bohrung
- 15: Fläche
- 16: Ausnehmung
- 17: Ausnehmung
- 18: Ausnehmung
- 19: Pfeil
- 20: Wandung
- 21: Bohrung
- 22: Bohrung
- 23: Bohrung
- 24: Stirnfläche
- 25: Schneiderträger

- A: Drehachse
- D: Abstand
- L1: Linie
- W 1: Winkel
- W2: Winkel
- W3: Winkel
- W4: Winkel

## Patentansprüche

1. Werkzeug für die spahnabhebende Bearbeitung, mit einem ersten Werkzeugteil (2) und mit einem zweiten Werkzeugteil (3), die eine gemeinsame Drehachse (A) aufweisen, wobei der erste Werkzeugteil (2) einen Passzapfen (4) und an dessen Wurzel eine Ringfläche (5) und der zweite Werkzeugteil (3) eine achsiale Bohrung (7) zur Aufnahme des Passzapfens (4) sowie eine Ringfläche (6) aufweist, die gegen die Ringfläche (5) des ersten Werkzeugteils (2) spannbar ist, mit Spannmitteln (8, 9, 10) zum achsialen Spannen der beiden Werkzeugteile (2, 3) gegeneinander, wobei die Spannmittel (8, 9, 10) drei über den Umfang des zweiten Werkzeugteils (3) verteilt angeordnete Halteschrauben (8, 9, 10) aufweisen, die radial jeweils in eine Gewindebohrung (12, 13, 14) des zweiten Werkzeugteils (3) eingeschraubt sind und die jeweils in eine radiale Bohrung (21, 22, 23) des Passzapfens (4) eingreifen, **dadurch gekennzeichnet, dass** der Winkel (W3) zwischen einer ersten Halteschraube (10) und einer zweiten Halteschraube (9) kleiner als 120° und grösser als 90° ist und dass der Winkel (W1) zwischen der ersten Halteschraube (10) und der dritten Halteschraube (8) gleich ist wie der Winkel (W2) zwischen der dritten Halteschraube (8) und der zweiten Halteschraube (9).

2. Werkzeug nach Anspruch 1, **dadurch gekennzeichnet, dass** der Winkel (W3) zwischen der ersten Halteschraube (10) und der zweiten Halteschraube (9) im Bereich von 95° bis 105° liegt.

3. Werkzeug nach Anspruch 1, **dadurch gekennzeichnet, dass** der Winkel (W3) zwischen der ersten Halteschraube (10) und der zweiten Halteschraube (9) etwa 100° beträgt.

4. Werkzeug nach einem der Ansprüche 1 bis 3, **dadurch gekennzeichnet, dass** jeder radialen Bohrung (21, 22, 23) eine Ausnehmung (16, 17, 18) im Passzapfen (4) zugeordnet ist, so dass der Passzapfen (4) durch Spannen der Halteschrauben (8, 9, 10) an seinem Umfang ausbauchbar ist.

5. Werkzeug nach Anspruch 4, **dadurch gekennzeichnet, dass** sich die Ausnehmungen (16, 17, 18) des Passzapfens (4) achsial durch die Bohrungen 121, 22, 23) des Passzapfens (4) hindurch erstrecken.

6. Werkzeug nach Anspruch 4 oder 5, **dadurch gekennzeichnet, dass** wenigstens eine Ausnehmung (18) des Passzapfens (4) an der Stirnfläche (24) des Passzapfens (4) offen ist.

7. Werkzeug nach Anspruch 4 oder 5, **dadurch gekennzeichnet, dass** wenigstens zwei und vorzugsweise alle drei Ausnehmungen (16, 17, 18) des Passzapfens (4) an der Stirnfläche (24) des Passzapfens (4) offen sind.

8. Werkzeug nach einem der Ansprüche 4 bis 7, **dadurch gekennzeichnet, dass** die Ausnehmungen (16, 17, 18) vergleichsweise schmale Schlitze mit einer Breite von 0,2 bis 0,4 mm vorzugsweise etwa 0,3 mm sind.

9. Werkzeug nach Anspruch 8, **dadurch gekennzeichnet, dass** die Ausnehmungen (16, 17, 18) mit einem Laser hergestellt sind.

10. Werkzeug nach einem der Ansprüche 4 bis 7, **dadurch gekennzeichnet, dass** die Ausnehmungen (16, 17, 18) Schlitze mit einer Breite von etwa 1 mm bis 5 mm sind.

## Claims

1. A tool for cutting machining, having a first tool part (2) and having a second tool part (3), which exhibit a common axis of rotation (A), the first tool part (2) exhibiting an alignment pin (4) and at its root an annular surface (5), and the second tool part (3) exhibiting an axial bore (7) to receive the alignment pin (4) and an annular surface (6), which is capable of being tensioned against the annular surface (5) of the first tool part (2) with tensioning means (8, 9, 10) for the axial tensioning of the two tool parts (2, 3) to one another, the tensioning means (8, 9, 10) exhibiting three retaining screws (8, 9, 10) arranged distributed around the periphery of the second tool part (3), which retaining screws are each screwed radially into a threaded bore (12, 13, 14) of the second tool part (3) and each engage in a radial bore (21, 22, 23) of the alignment pin (4), **characterized in that** the angle (W3) between a first retaining screw (10) and a second retaining screw (9) is smaller than 120° and larger than 90°, and **in that** the angle (W1) between the first retaining screw (10) and the third retaining screw (8) is identical with the angle (W2) between the third retaining screw (8) and the second retaining screw (9).

2. The tool as claimed in claim 1, **characterized in that** the angle (W3) between the first retaining screw (10) and the second retaining screw (9) lies in the range from 95° to 105°.

3. The tool as claimed in claim 1, **characterized in that** the angle (W3) between the first retaining screw (10) and the second retaining screw (9) is in the order of 100°.

4. The tool as claimed in one of claims 1 to 3, **characterized in that** a recess (16, 17, 18) in the alignment pin (4) is allocated to each radial bore (21, 22, 23), so that the alignment pin (4) is capable of being caused to bulge at its periphery by tensioning the retaining screws (8, 9, 10).

5. The tool as claimed in claim 4, **characterized in that** the recesses (16, 17, 18) in the alignment pin (4) extend axially through the bores (21, 22, 23) of the alignment pin (4).

6. The tool as claimed in claims 4 or 5, **characterized in that** at least one recess (18) in the alignment pin (4) is open at the end surface (24) of the alignment pin (4).

7. The tool as claimed in claims 4 or 5, **characterized in that** at least two, and preferably all three recesses (16, 17, 18) in the alignment pin (4) are open at the end surface (24) of the alignment pin (4).

8. The tool as claimed in one of claims 4 to 7, **characterized in that** the recesses (16, 17, 18) are comparatively narrow slots with a width of 0.2 to 0.4 mm, and preferably approximately 0.3 mm.

9. The tool as claimed in claim 8, **characterized in that** the recesses (16, 17, 18) are produced with a laser.

10. The tool as claimed in one of claims 4 to 7, **characterized in that** the recesses (16, 17, 18) are slots with a width of about 1 mm to 5 mm.

## Revendications

1. Outil de traitement par enlèvement de copeaux, comprenant une première partie d'outil (2) et une deuxième partie d'outil (3), qui présentent un axe de rotation commun (A), la première partie d'outil (2) présentant un tourillon d'ajustement (4) et à sa racine, une surface annulaire (5), et la deuxième partie d'outil (3) présentant un alésage axial (7) pour recevoir le tourillon d'ajustement (4) ainsi qu'une surface annulaire (6), qui peut être serrée contre la surface annulaire (5) de la première partie d'outil (2), comprenant des moyens de serrage (8, 9, 10) pour le serrage axial des deux parties d'outil (2, 3) l'une contre l'autre, les moyens de serrage (8, 9, 10) présentant trois vis de fixation (8, 9, 10) réparties sur la périphérie de la deuxième partie d'outil (3), lesquelles sont vissées radialement à chaque fois dans un alésage fileté (12, 13, 14) de la deuxième partie d'outil (3), et qui viennent en prise à chaque fois dans un alésage radial (21, 22, 23) du tourillon d'ajustement (4), **caractérisé en ce que** l'angle (W3) entre une première vis de fixation (10) et une deuxième vis de fixation (9) est inférieur à 120° et est supérieur à 90° et **en ce que** l'angle (W1) entre la première vis de fixation (10) et la troisième vis de fixation (8) est égal à l'angle (W2) entre la troisième vis de fixation (8) et la deuxième vis de fixation (9).

2. Outil selon la revendication 1, **caractérisé en ce que** l'angle (W3) entre la première vis de fixation (10) et la deuxième vis de fixation (9) est compris dans la plage de 95° à 105°.

3. Outil selon la revendication 1, **caractérisé en ce que** l'angle (W3) entre la première vis de fixation (10) et la deuxième vis de fixation (9) vaut environ 100°.

4. Outil selon l'une quelconque des revendications 1 à 3, **caractérisé en ce que** chaque alésage radial (21, 22, 23) est associé à un évidement (16, 17, 18) dans le tourillon d'ajustement (4), de sorte que le tourillon d'ajustement (4) puisse être bombé vers l'extérieur au niveau de sa périphérie par serrage des vis de fixation (8, 9, 10).

5. Outil selon la revendication 4, **caractérisé en ce que** les évidements (16, 17, 18) du tourillon d'ajustement (4) s'étendent axialement à travers les alésages (21, 22, 23) du tourillon d'ajustement (4).

6. Outil selon la revendication 4 ou 5, **caractérisé en ce qu'**au moins un évidement (18) du tourillon d'ajustement (4) est ouvert au niveau de la surface frontale (24) du tourillon d'ajustement (4).

7. Outil selon la revendication 4 ou 5, **caractérisé en ce qu'**au moins deux et de préférence les trois évidements (16, 17, 18) du tourillon d'ajustement (4) sont ouverts au niveau de la surface frontale (24) du tourillon d'ajustement (4).

8. Outil selon l'une quelconque des revendications 4 à 7, **caractérisé en ce que** les évidements (16, 17, 18) sont des fentes relativement minces ayant une largeur de 0,2 à 0,4 mm, de préférence d'environ 0,3 mm.

9. Outil selon la revendication 8, **caractérisé en ce que** les évidements (16, 17, 18) sont fabriqués avec un laser.

10. Outil selon l'une quelconque des revendications 4 à 7, **caractérisé en ce que** les évidements (16, 17, 18) sont des fentes ayant une largeur d'environ 1 mm à 5 mm.
